# EUROPEAN PATENT SPECIFICATION

(11) **EP 2 314 443 B1**
(45) Date of publication and mention of the grant of the patent: **23.04.2014**
(21) Application number: 09173937.5
(22) Date of filing: 23.10.2009
(51) Int. Cl.: B23K 31/00, B29C 65/44, B60N 3/04

(54) **Method for the manufacture of an anti-slippery running surface in a structure of vehicle bodywork**
Verfahren zur Herstellung einer Antirutsch-Lauffläche in einer Struktur einer Fahrzeugkarosserie
Procédé pour la fabrication d'une surface de roulement anti-glissante dans une structure de carrosserie de véhicule

(43) Date of publication of application: 27.04.2011
(73) Proprietor: IVECO MAGIRUS AG, 89079 Ulm (DE)
(72) Inventor: Mühe-Sturm, Frank, 89231, Neu-Ulm (DE); Fitz, Harald, 77948, Friesenheim (DE)
(74) Representative: Borsano, Corrado

(56) References cited:
- JP-A- 6 155 484
- JP-B- 6 078 684
- JP-U- 4 078 033
- JP-U- 63 076 552

## Description

### Field of the invention

The present invention relates to a method for the manufacture of an anti-slippery running surface in a structure of vehicle bodywork.

### Description of the prior art

Anti-slippery running surfaces are very important for safety purposes in a number of applications in vehicles, like fire-fighting vehicles, where the firemen must safely run over steps in the vehicle, avoiding having accidents due to slipping. The patent application JP 06078684 discloses an anti-slippery element usable as a floor covering portion. The patent application JP 04078033 discloses an anti-slippery element usable as a mat for a motor vehicle.

It is known in the technique, the production of anti-slippery surfaces corresponding to the usual standards and regulations, by applying rolled aluminium pinned plates (Duett and/or Quintett patterns) for reaching the demanded values to the slip resistance (min. Rll) and the displacement area (min V6), for example applying press formed or milled in techniques.

The current solutions suffer from a number of drawbacks, including the following:
The currently used aluminium pinned plates (duett patterns) for aerial fire fighting vehicles are not available on the market in the layout required by standard with certificate, namely in the required width or length.

Different versions of the surface with different fire fighting vehicle types must be made, having no uniform appearance.

High costs because of massive material, and high weight because of massive structure are generated.

The known solutions often need a structural element at the basis below to take over the forces (in fact they are normally only thin sheets), increasing weight and costs.

### Summary of the invention

Therefore it is the main object of the present invention to provide a method for the manufacture of an anti-slippery running surface in a structure of vehicle bodywork, which overcomes the above problems/drawbacks.

The subject of the present invention is a method for the manufacture of an anti-slippery running surface in a structure of vehicle bodywork, comprising the steps of:
a) providing a multi-layer structure comprising:
   - an upper metal perforated plate, comprising a number of through-holes having an elevated contour with respect to the plate surface;
   - an intermediate layer of thermoplastic material;
   - a lower structural rigid component of the bodywork;
b) thermally welding the upper perforated plate with the lower structural component through the intermediate layer of thermoplastic material.

These and further objects are achieved by means of a method for the manufacture of an anti-slippery running surface in a structure of vehicle bodywork, as described in the attached claims, which form an integral part of the present description.

### Brief description of the drawings

The invention will become fully clear from the following detailed description, given by way of a mere exemplifying and non limiting example, to be read with reference to the attached drawing figures, wherein:
- Figures 1 and 2 show an expanded and respectively compacted view of the components of the anti-slippery running surface in accordance with the invention;

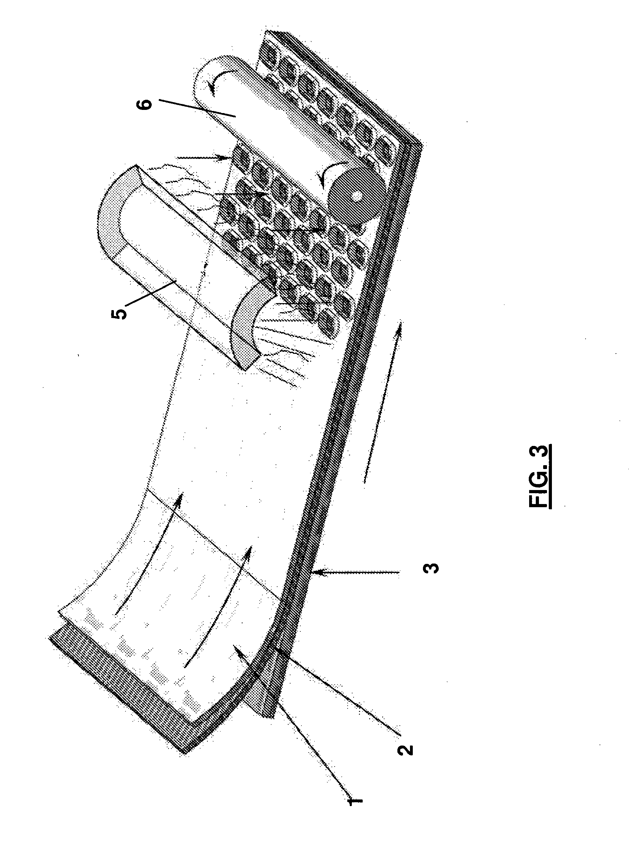

- Figure 3 shows an example of the method for manufacturing the structure.

The same reference numerals and letters in the figures designate the same or functionally equivalent parts.

### Detailed description of the preferred embodiments

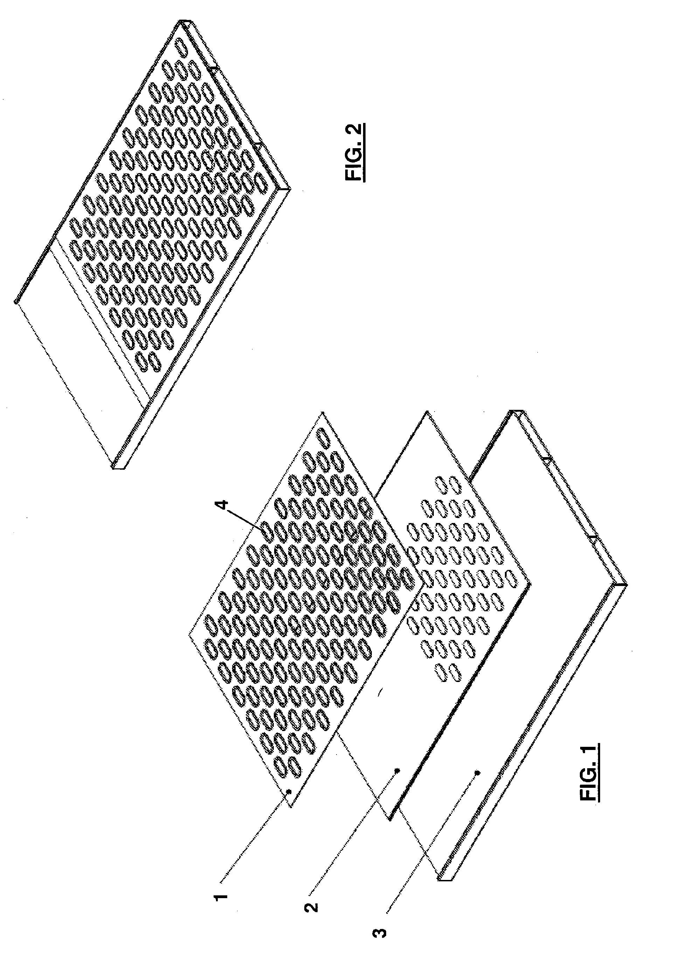

As shown in fig. 1, the method foresees providing a multi-layer structure comprising::
- an upper metal perforated plate, comprising a number of through-holes 4 having an elevated contour with respect to the plate surface;
- an intermediate layer of thermoplastic material 2.
- a lower structural rigid component 3 of the bodywork, for example but not limited to a metal extruded section, like aluminium.

Then the method provides for thermally welding the upper perforated plate with the lower structural component through the intermediate layer of thermoplastic material.

The thermal welding combines the metal perforated plate with the thermoplastic material and fills the openings of the metal perforated plate conclusively up, so as the thermoplastic material reaches the level of the elevated contour of the through-holes.

At the same time the thermoplastic welds with the lower structural component.

The result is an overall structure component of the vehicle increasing, additionally to the adhesive powers, the peeling off firmness by mechanical connections.

The so obtained structure mechanically inseparably welded, provides for a sandwich surface, made of thermoplastic and metal perforated plate, achieving the demanded values for slip resistance and displacement area by its geometrical form.

The process of thermal welding can be done by downstream process operations like heating the thermoplastics by a heating element 5, and afterwards deeply injecting with the metal structures or during a continuous process where the metal / plastic structures go through a hot element, and afterwards through a roll press 6.

For the upper metal plate, any material that is able to be bonded together with the plastics of the intermediate layer by heat can be used. It can be for example aluminium, steel profiles or thin steel sheet.

For the intermediate layer any thermoplastics could be used, for example polypropylene, polyethylene, polyamide, PVC. The plastics must be able to create adhesive forces after being heated up, pressed and cooled down.

In particular the anti-slippery running surface can be advantageously applied to a structure of a vehicle bodywork, like for example a fire-fighting vehicle, for:
- Running surfaces in the interior and external area of vehicle bodyworks.
- Ascents / ascent plates.
- Ramps.
- Floor of van body and driving cabs / crew cab modules.
- On-board side wall flaps, which are used as ascent aids.

By means of the present invention, a number of advantages are achieved, over the known solutions.

The benefit of the material is to include the anti-slippery surface directly on the structural elements without the need to add it afterwards. With extruded profiles, a special surface can only be included in direction of extrusion. So the transversal roughness of the direction of extrusion is avoided.

The material can be used to create walk on platforms where a special anti slippers surface is needed. This can be the floor of a transporter, the working platform of a machine, working platform of a fire fighting ladder, walk on roof covers, steps of staircases, foldable or sliding steps of a truck.

Further advantages are in particular, but not limited to, an integration of a closed surface for running surfaces in the interior and external area into structural components of the body with special requirements for the slip resistance (min. R 11) and the displacement area (min V6) in accordance with the valid UW regulations and standards for special vehicles, like fire-fighting vehicles, in permanent, strainable and corrosion resistant execution. Adaption of the new surface in all types of fire fighting vehicles.

Still further advantages are:
- Reaching / exceeding of the demanded slip resistance and the displacement area integrated in the formation of the superstructure without using additional covers with anti-slip structure.
- Cost reduction by elimination of material and processing steps.
- Weight reduction.
- Different thickness of the coating possible.
- Economical, simple manufacturing process.
- Flexible, also suitable for special and individual solutions.
- Optical revaluation of the product, different colors and hole patterns of the aluminum lowering perforated plate possible.

Many changes, modifications, variations and other uses and applications of the subject invention will become apparent to those skilled in the art after considering the specification and the accompanying drawings which disclose preferred embodiments thereof.

Further implementation details will not be described, as the man skilled in the art is able to carry out the invention starting from the teaching of the above description.

## Claims

1. Method for the manufacture of an anti-slippery running surface in a structure of vehicle bodywork, comprising the steps of:
a) providing a multi-layer structure comprising:
- an upper metal perforated plate (1), comprising a number of through-holes (4) having an elevated contour with respect to the plate surface;
- an intermediate layer of thermoplastic material (2);
- a lower structural rigid component (3) of the bodywork;
b) thermally welding the upper perforated plate with the lower structural component through the intermediate layer of thermoplastic material.

2. Method according to claim 1, wherein the thermal welding fills the through-holes of the perforated plate, so as the thermoplastic material reaches the level of the elevated contour of the through-holes.

3. Method according to any of the preceding claims, wherein the upper metal perforated plate is able to be bonded together with the plastics of the intermediate layer by heat.

4. Method according to claim 3, wherein the upper metal perforated plate is aluminium, or a steel profiles or a thin steel sheet.

5. Method according to claim 3, wherein the intermediate layer is polypropylene, polyethylene, polyamide, PVC, able to create adhesive forces after being heated up, pressed and cooled down.

6. Method according to claim 3, wherein the lower structural rigid component is extruded aluminium.

## Patentansprüche

1. Verfahren zum Herstellen einer Antirutsch-Lauffläche in einer Fahrzeugkarosserie-Struktur, umfassend die Schritte, daß man
(a) eine Viel-Schichten-Struktur bereitstellt, die umfaßt:
- eine obere perforierte Platte (1) aus Metall, die eine Zahl durchgehender Löcher (4) umfaßt, die eine erhabene Kontur in Bezug auf die PlattenOberfläche haben;
- eine Zwischenschicht aus thermoplastischem Material (2);
- eine untere strukturelle starre Komponente (3) der Karosserie;
(b) die obere perforierte Platte mit der unteren strukturellen Komponente durch die Zwischenschicht aus thermoplastischem Material thermisch verschweißt.

2. Verfahren nach Anspruch 1, worin das thermische Verschweißen die durchgehenden Löcher der perforierten Platte füllt, so wie das thermoplastische Material das Niveau der erhabenen Kontur der durchgehenden Löcher erreicht.

3. Verfahren nach irgendeinem der vorangehenden Ansprüche, worin die obere perforierte Platte aus Metall befähigt ist, mittels Hitze zusammen mit den Kunststoffen der Zwischenschicht verbunden zu werden.

4. Verfahren nach Anspruch 3, worin die obere perforierte Platte aus Metall aus Aluminium ist oder ein Stahlprofil ist oder eine dünne Stahl-Platte ist.

5. Verfahren nach Anspruch 3, worin die Zwischenschicht aus Polypropylen, Polyethylen, Polyamid, PVC ist und befähigt ist, Haftkräfte zu erzeugen, nachdem sie aufgewärmt, gepreßt und abgekühlt wurde.

6. Verfahren nach Anspruch 3, worin die untere strukturelle starre Komponente aus extrudiertem Aluminium ist.

## Revendications

1. Procédé de fabrication d'une surface de roulement anti-glissante dans une structure de carrosserie de véhicule, comprenant les étapes de :
a) réaliser une structure multicouche comprenant :
- une plaque perforée métallique supérieure (1), comprenant un nombre de trous traversants (4) ayant un contour élevé par rapport à la surface de la plaque ;
- une couche intermédiaire en matériau thermoplastique (2) ;
- un composant structurel inférieur rigide (3) de la carrosserie ;
b) souder thermiquement la plaque perforée supérieure au composant structurel inférieur par la couche intermédiaire du matériau thermoplastique.

2. Procédé selon la revendication 1, dans lequel le soudage thermique remplit les trous traversants de la plaque perforée de sorte que le matériau thermoplastique atteint le niveau du contour élevé des trous traversants.

3. Procédé selon l'une quelconque des revendications précédentes, dans lequel la plaque perforée métallique supérieure est apte à être assemblée avec le plastique de la couche intermédiaire par la chaleur.

4. Procédé selon la revendication 3, dans lequel la plaque métallique supérieure perforée est en aluminium ou est un profile en acier ou une tôle mince.

5. Procédé selon la revendication 3, dans lequel la couche intermédiaire est en polypropylène, polyéthylène, polyamide, PVC, apte à créer des forces adhésives après avoir été chauffée, pressée et refroidie.

6. Procédé selon la revendication 3, dans lequel le composant inférieur structurel rigide est en aluminium extrudé.
